Europäisches Patentamt

European Patent Office

Office européen des brevets

(19)

(11) Veröffentlichungsnummer : **0 058 926**
**B1**

# (12) EUROPÄISCHE PATENTSCHRIFT

(45) Veröffentlichungstag der Patentschrift :
24.04.85

(21) Anmeldenummer : 82101161.6

(22) Anmeldetag : 17.02.82

(51) Int. Cl.⁴ : **B 29 C 45/82, B 22 D 17/26**

(54) **Formschliessvorrichtung.**

(30) Priorität : 25.02.81 DE 3107004

(43) Veröffentlichungstag der Anmeldung :
01.09.82 Patentblatt 82/35

(45) Bekanntmachung des Hinweises auf die Patenterteilung : 24.04.85 Patentblatt 85/17

(84) Benannte Vertragsstaaten :
AT CH DE FR GB IT LI NL

(56) Entgegenhaltungen :
FR-A- 2 021 870
US-A- 2 878 648
US-A- 3 084 512
US-A- 3 905 742

(73) Patentinhaber : **Krauss-Maffei Aktiengesellschaft**
**Krauss-Maffei-Strasse 2**
**D-8000 München 50 (DE)**

(72) Erfinder : **Wohlrab, Walter**
**Birkenweg 9**
**D-8832 Weissenburg (DE)**

EP 0 058 926 B1

## Beschreibung

Die Erfindung bezieht sich auf eine Formschließvorrichtung gemäß Oberbegriff des Hauptanspruchs.

Eine Formschließvorrichtung dieser Art ist aus der FR-A-2 021 870 bekannt, bei der die Nachsaugöffnung seitlich in den öffnungsseitigen Schließzylinderraum einmündet. Mit dieser, die Zylinderwandung des Schließzylinders durchdringenden Öffnung wird einerseits der Stellweg des Schließkolbens verkürzt, bzw. die Baulänge des Schließzylinders verlängert. Bei der Wahl des Durchmessers der Nachsaugöffnungen ist diesen Nachteilen Rechnung zu tragen, so daß ein Kompromiß zwischen Querschnittsfläche der Nachsaugöffnung und der Baulänge des Schließzylinders bzw. des Kolbenwegs des Schließkolbens zu bilden ist. Um eine optimale Nachsaugeigenschaft im Eilgang zu erreichen, wird man daher gezwungen sein, mehrere Nachsaugventile auf einer Querschnittsebene des Schließzylinders anzuordnen. In jedem Fall ist die seitliche Anordnung von Nachsaugöffnungen mit dem Nachteil verbunden, daß jede Nachsaugöffnung ein gesondertes Nachsaugventil mit der zugehörigen Steuerungseinheit und den Steuerungsleitungen erfordert.

Der Erfindung liegt die Aufgabe zugrunde, bei Gewährleistung eines optimalen Durchtrittsquerschnitts der Nachsaugöffnung den hohen Aufwand an Steuer- und Nachsaugventilen zu vermindern.

Diese Aufgabe wird durch die Merkmale aus dem Kennzeichen des Hauptanspruchs gelöst. Für die Betriebsphasen « Mit Eilganggeschwindigkeit schließen » und « Nachsaugventile öffnen » ist nur eine Ansteuerung und somit auch nur eine Leitung notwendig. Das Nachsaugventil wird beim Öffnen und Schließen automatisch in die richtige Schaltstellung gebracht. Es ergibt sich auch ein geringerer Steuerungsaufwand im Hydrauliksystem, da die Funktionen « Schließen und Saugventil öffnen » sowie « Öffnen und Saugventil öffnen » zusammengelegt sind.

Für die Nachsaugflüssigkeit ist darüber hinaus der größtmögliche Durchflußquerschnitt erreicht. Das Nachsaugventil in der bevorzugten Ausführungsform als Tellerventil ist in seinem Außendurchmesser kaum beschränkt und kann sich bis in die Nähe der Schließzylinderwandung erstrecken. Abgesehen von der einfachen Bauweise der mechanischen Teile sowie dem verringerten Aufwand an Steuerungselementen und Ventilen werden somit auch wesentlich höhere Nachsaugleistungen erzielt, wodurch sich bei vermindertem Energieaufwand die Eilgangfahrgeschwindigkeit erhöhen läßt.

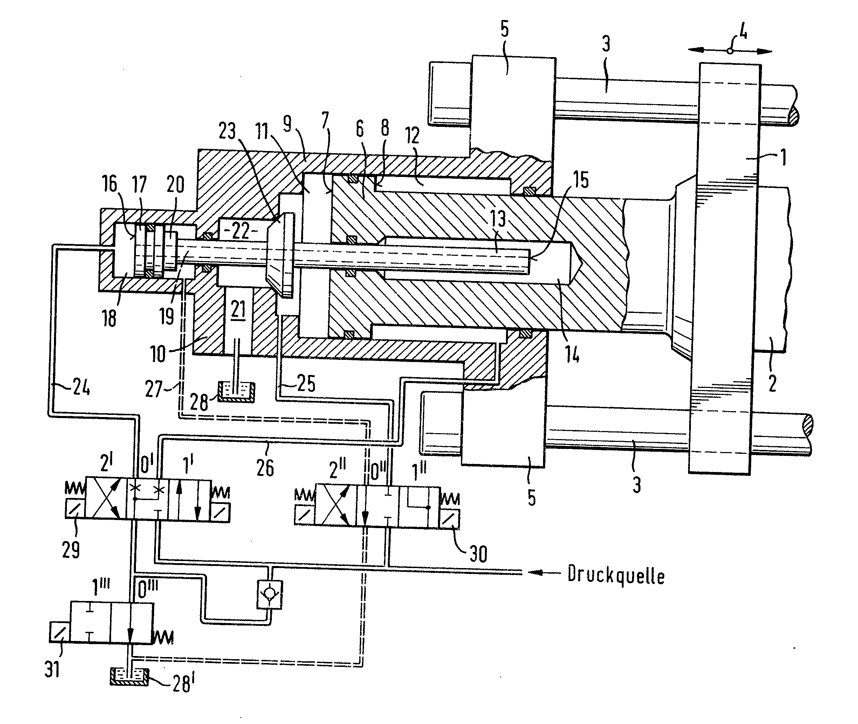

Weitere Merkmale und Vorteile der Erfindung ergeben sich aus der nachfolgenden Beschreibung anhand der Zeichnung und in Verbindung mit den Ansprüchen.

In der Zeichnung ist mit 1 eine Formträgerplatte bezeichnet, an der schließseitig eine Formhälfte 2 teilweise dargestellt ist. Die Formträgerplatte 1 ist auf Führungssäulen 3 in der Pfeilrichtung 4 in Schließ- und Öffnungsrichtung hin- und herbewegbar geführt. Die Führungssäulen 3 sind starr mit einer feststehenden Ständerplatte 5 verbunden, an der die Hydraulikelemente zum Antrieb der Formträgerplatte angeordnet sind.

Die Hydraulikelemente bestehen im wesentlichen aus einem doppeltwirkenden Schließkolben 6 mit einer öffnungsseitigen Kolbenfläche 7 und einer schließseitigen Kolbenfläche 8. Der Schließkolben 6 ist in einem Schließzylinder 9 gelagert, der schließseitig mit der Ständerplatte 5 verbunden ist und öffnungsseitig von einem Schließzylinderdeckel 10 verschlossen ist. Der Schließzylinderraum wird vom Schließkolben 6 in einen öffnungsseitigen und in einen schließseitigen Schließzylinderraum 11 bzw. 12 unterteilt.

Zentrisch im Schließzylinder 9 ist ein Eilgangkolben 13 angeordnet, der mit seinem öffnungsseitigen Ende im Schließzylinderdeckel 10 und mit seinem schließseitigen Ende in einem im Schließkolben 6 ausgebildeten Eilgangszylinder 14 gelagert ist, wobei dieses Ende die Eilgangkolbenfläche 15 darstellt. Die entgegengesetzt gerichtete Endfläche des Eilgangkolbens 13 wird von einer Stellkolbenfläche 16 eines Stellkolbens 17 gebildet, der in einem im Schließzylinderdeckel 10 gelegenen Stellzylinder 18 angeordnet ist. Die Stellkolbenfläche 16 ist dabei größer als die Eilgangkolbenfläche 15 ausgelegt (Flächenverhältnis z. B. 2 : 1). Diese beiden Kolbenflächen werden von einer zentrisch gelegenen Eilgangleitung 19 durchdrungen, wodurch der öffnungsseitige Stellzylinderraum und der Eilgangzylinderraum miteinander in Verbindung stehen. Am schließseitigen Ende des Stellkolbens 17 befindet sich ein den axialen Verschiebungsweg des Eilgangkolbens 13 begrenzender Anschlag 20.

Im Schließzylinderdeckel 10 befindet sich eine Nachsaugleitung 21, die in eine zentrisch angeordnete Nachsaugöffnung 22 übergeht. Diese Nachsaugöffnung 22 ist mittels eines als Tellerventil ausgebildeten Nachsaugventils 23 verschließbar, das integral mit dem Eilgangkolben 13 verbunden ist.

In den öffnungsseitigen Teilraum des Stellzylinders 18 führt eine Stelleitung 24 von wo aus das Druckmittel über die zentrische Eilgangleitung 19 in den Eilgangzylinder 14 gelangen kann. An dem vom Schließzylinder 9 und der öffnungsseitigen Kolbenfläche 7 umschlossenen Raum ist eine Schließleitung 25, an den von der schließseitigen Kolbenfläche 8 und vom Schließzylinder 9 umschlossenen Raum ist eine Öffnungsleitung 26 und an den schließseitigen Stellzylinderraum ist eine Steuerleitung 27, angeschlossen. Die im Schließzylinderdeckel 10 ausgebildete Nachsaugleitung 21 ist mit einem Tank 28 verbunden. Die Stelleitung 24 und die Öffnungsleitung 26 sind an ein erstes 4/3-Wegeventil 29 und die Schließleitung 25 und die Steuerleitung 27 sind an ein zweites 4/3-Wegeventil 30 angeschlossen, wobei die beiden 4/3-Wegeventile noch mit einem 2/2-Wegeventil 31 in Verbindung stehen.

Bei Inbetriebnahme einer sich in Öffnungsstellung befindlichen Spritzgießmaschine wird zunächst das erste 4/3-Wegeventil 29 in die Schaltstellung 2' gebracht, in der die Stelleitung 24 mit Druck beaufschlagt wird und die Öffnungsleitung 26 mit dem Tank 28' verbunden wird. Bedingt durch das Flächenverhältnis zwischen Stellkolbenfläche 16 und Eilgangkolben 15 erfolgt eine Verschiebung des Eilgangkolbens 13 bis zum Aufsetzen des Anschlags 20, womit das mit dem Eilgangkolben 13 eine Einheit bildende Nachsaugventil 23 in Öffnungsstellung positioniert wird. Hierauf pflanzt sich der Druck über die Eilgangleitung 19 zum Eilgangzylinder 14 fort und wirkt auf die der Eilgangkolbenfläche 15 gegenüberliegende Fläche des Eilgangzylinderraumes, wodurch der Schließkolben 6 die Formträgerplatte 1 im Eilgang in die Schließstellung fährt. Aufgrund der großen Nachsaugöffnung und der damit bedingten guten Saugleistung kann der Eilgangvorschub mit hoher Fahrgeschwindigkeit und geringem Energieaufwand erfolgen. In dieser Betriebsphase befinden sich das zweite 4/3-Wegeventil 30 in der Schaltstellung 0" und das 2/2-Wegeventil 31 in der Schaltstellung 0'''.

Zum Aufbau der Schließkraft nach Erreichen der Schließstellung wird zunächst das erste 4/3-Wegeventil 29 in die Schaltstellung 0' gebracht, in der die Stelleitung 24 und die Öffnungsleitung 26 zum Tank 28' geschaltet sind. Anschließend wird das zweite 4/3-Wegeventil 30 in die Schaltstellung 1" gebracht, in der die Steuerleitung 27 und die Schließleitung 25 mit Druck beaufschlagt werden. Das Nachsaugventil 23 schließt sich, worauf das Druckmedium voll auf die öffnungsseitige Kolbenfläche 7 wirken kann.

Zum Losreißen wird die schließseitige Kolbenfläche 8 des Schließkolbens 6 mit Druck beaufschlagt, wohingegen die Stelleitung 24 und die Schließleitung 25 mit dem Tank 28' verbunden werden.

In dieser Betriebsphase befinden sich das erste 4/3-Wegeventil 29 in der Schaltstellung 1', das zweite 4/3-Wegeventil 30 in der Schaltstellung 2" und das 2/2-Wegeventil 31 in der Schaltstellung 0'''.

Zum Öffnen der Formschließvorrichtung mit Eilganggeschwindigkeit wird mittels des 2/2-Wegeventils 31 die Tankverbindung der Stellkolbenfläche 16 unterbrochen. Die Eilgangkolbenfläche 15 des Eilgangkolbens 13 wird in Differentialschaltung gegen die schließseitige Kolbenfläche 8 des Schließkolbens 6 geschaltet, worauf sich durch den Druckaufbau auf die Stellkolbenfläche 16 das Nachsaugventil 23 automatisch öffnet und die Druckflüssigkeit aus dem öffnungsseitigen Schließzylinderraum zum Tank 28' abfließen kann.

In dieser Betriebsphase befinden sich das erste 4/3-Wegeventil 29 in der Schaltstellung 1', das zweite 4/3-Wegeventil 30 in der Schaltstellung 0" und das 2/2-Wegeventil 31 in der Schaltstellung 1'''.

Statt der Beaufschlagung der der Stellkolbenfläche 16 entgegengesetzt gerichteten Kolbenfläche zur Rückführung des Stellkolbens 17 mit Druckmittel, kann im Stellzylinder 18 auch eine Druckfeder angeordnet sein.

## Patentansprüche

1. Formschließvorrichtung für eine Spritzgießmaschine mit einer hydraulisch verschiebbaren Formträgerplatte (1), deren Antriebsvorrichtung aus einem in einem Schließzylinder (9) geführten, doppeltwirkenden Schließkolben (6) mit einer öffnungsseitigen und einer schließseitigen Kolbenfläche (7, 8) und einem Eilgangkolben (13) besteht, der zentrisch in einem dem Schließkolben (6) zugeordneten Eilgangzylinder (14) mit in Schließrichtung weisender Eilgangkolbenfläche (15) angeordnet ist, und der sich auf dem, den Schließzylinder (9) öffnungsseitig begrenzenden Schließzylinderdeckel (10) abstützt, wobei der Eilgangzylinderraum über eine zentrisch im Eilgangkolben (13) ausgebildete Eilgangleitung (19), der öffnungsseitige Schließzylinderraum (11) über im Schließzylinderdeckel (10) ausgebildete, mittels eines Nachsaugventils (23) verschließbare Nachsaugöffnungen (22) sowie über eine Schließleitung (25) und der schließseitige Schließzylinderraum (12) über eine Öffnungsleitung mit Druckflüssigkeit bzw. Flüssigkeit beaufschlagbar sind, worin

— der Eilgangkolben (13) im Schließzylinderdeckel (10) axial verschieblich gelagert ist,

— der Eilgangkolben (13) einen Stellkolben (17) aufweist, dessen Stellkolbenfläche (16) zur Eilgangkolbenfläche (15) entgegengesetzt gerichtet ist und mit dieser über die Eilgangleitung (19) verbunden ist,

— der Stellkolben (17) in einem im Schließzylinderdeckel (10) angeordneten Stellzylinder (18) mit Druckmittel beaufschlagbar ist,

— die Stellkolbenfläche (16) größer als die Eilgangkolbenfläche (15) ist, dadurch gekennzeichnet, daß

— der Eilgangkolben (13) das Nachsaugventil (23) aufweist, mit dem durch axiale Verschiebung des Eilgangkolbens (13) der Druckmittelfluß durch die im Schließzylinderdeckel (10) enthaltene Nachsaugöffnung (22) steuerbar ist,

— Einrichtungen zur Rückstellung des Stellkolbens (17) bzw. des Eilgangkolbens (13) in eine die Nachsaugöffnung (22) verschließende Stellung und

— ein Anschlag (20) zur Hubbegrenzung des Stellkolbens (17) bzw. des Nachsaugventils (23) vorgesehen sind.

2. Vorrichtung nach Anspruch 1, dadurch gekennzeichnet, daß die Nachsaugöffnung (22) zentrisch im Schließzylinderdeckel (10) angeordnet ist und mit dem als Tellerventil ausgebildeten Nachsaugventil (23) verschließbar ist.

3. Vorrichtung nach den Ansprüchen 1 und 2, dadurch gekennzeichnet, daß die Einrichtungen zur Rückführung des Stellkolbens (17) aus einer Druckfeder bestehen.

4. Vorrichtung nach den Ansprüchen 1 und 2, dadurch gekennzeichnet, daß die Einrichtungen zur Rückführung des Stellkolbens (17) aus einer mit Druckmittel beaufschlagbaren Gegenkolbenfläche zur Stellkolbenfläche (16) bestehen.

## Claims

1. A mold closing device for an injection molding machine comprising a hydraulically driven mold support plate (1), whose driving means is made up of a double acting closing piston (6) running in a closing cylinder (9) with piston faces (7 and 8) on the opening side and on the closing side, and a high-speed piston (13), that is placed centrally in a high-speed cylinder (14) associated with the closing piston (6) and having a high speed piston face (15) turned in the closing direction, and resting on the closing cylinder end plate (10) limiting the closing cylinder (9) on the opening side, and the high-speed cylinder space is supplied with liquid or liquid under pressure via a high speed duct (19) formed centrally in the high speed piston (13), the closing cylinder space (11) on the opening side is supplied with pressure liquid or liquid by way of suction openings (22) formed in the closing cylinder end plate (10) and able to be closed by a suction valve (23), and by way of a closing duct (25) and the closing space (12) on the closing side is supplied with liquid or liquid under pressure by way of an opening duct, wherein
— the high speed piston (13) runs axially in the closing cylinder end plate (10),
— the high speed piston (13) has a setting piston (17), whose setting piston face (16) faces in the opposite direction to the high speed piston face (15) and is joined with same by way of the high speed duct (19),
— the setting piston (17) in a setting cylinder (18) placed in the closing cylinder end plate (10) is able to be acted upon by fluid under pressure,
— the setting piston face (16) is larger than the high speed piston face (15),
characterized in that
— the high speed piston (13) has the suction valve (23), with which by axial displacement of the high speed piston (13) the flow of fluid under pressure through the suction port (22) in the end plate (10) of the closing cylinder may be controlled,
— means for returning the setting piston (17) or the high speed piston (13) into a position closing the suction opening (22) and
— a stop (20) for limiting the stroke of the setting piston (17) or of the suction valve (23).

2. The device as claimed in claim 1, characterized in that the suction opening (22) is placed centrally in the closing cylinder end plate (10) and may be closed by the suction valve (23) in the form of a plate valve.

3. The device as claimed in claims 1 and 2, characterized in that the means for returning the setting piston (17) are made up of a compression spring.

4. The device as claimed in claims 1 and 2, characterized in that the means for returning the setting piston (17) are made up of a piston face opposite to the setting piston face (16) and able to be acted on by fluid under pressure.

## Revendications

1. Dispositif de fermeture de moule pour une machine de coulée par injection comportant une plaque de support de moule (1) déplaçable hydrauliquement par translation, dont le dispositif d'entraînement se compose d'un piston de fermeture (6) à double effet, guidé dans un cylindre de fermeture (9) et comportant une surface placée du côté ouverture et une surface placée du côté fermeture (7, 3), ainsi qu'un piston de marche rapide (13), qui est disposé de façon centrée dans un cylindre de marche rapide (14) associé au piston de fermeture (5) avec une surface de piston de marche rapide (15) orientée dans la direction de fermeture, et qui s'appuie sur le couvercle de cylindre de fermeture (10) délimitant du côté ouverture le cylindre de fermeture (9), du liquide simple ou sous pression pouvant alimenter le volume de cylindre de marche rapide par l'intermédiaire d'un conduit de marche rapide (19) formé centralement dans le piston de marche rapide (13), pouvant alimenter le volume de cylindre de fermeture (11) placé du côté ouverture par l'intermédiaire d'orifices de post-aspiration (22) formés dans le couvercle de cylindre de fermeture (10) et pouvant être fermés au moyen d'une soupape de post-aspiration (23) ainsi que par l'intermédiaire d'un conduit de fermeture (25), et pouvant alimenter le volume de cylindre de fermeture (12) placé du côté fermeture par l'intermédiaire d'un conduit d'ouverture, dispositif dans lequel :
— le piston de marche rapide (13) est monté de façon à pouvoir coulisser axialement dans le couvercle (10) du cylindre de fermeture,
— le piston de marche rapide (13) comporte un piston d'actionnement (17) dont la surface (16) est dirigée en sens opposé à la surface (15) du piston de marche rapide et est reliée à celle-ci par l'intermédiaire du conduit de marche rapide (19),
— le piston d'actionnement (17) peut être sollicité par du fluide sous pression dans un cylindre d'actionnement (18) disposé dans le couvercle (10) du cylindre de fermeture,
— la surface (16) du piston d'actionnement est supérieure à la surface (15) du piston de marche rapide,
et caractérisé en ce que :
— le piston de marche rapide (13) comporte la soupape de post-aspiration (23) au moyen de laquelle l'écoulement de fluide sous pression passant dans l'orifice de post-aspiration (22) ménagé dans le couvercle (10) du cylindre de fermeture peut être commandé par déplacement axial du piston de marche rapide (13),

— il est prévu des moyens pour assurer le rappel du piston d'actionnement (17) ou du piston de marche rapide (13) dans une position d'obturation de l'orifice de post-aspiration (22), et

— il est prévu une butée (20) pour limiter la course du piston d'actionnement (17) ou de la soupape de post-aspiration (23).

2. Dispositif selon la revendication 1, caractérisé en ce que l'orifice de post-aspiration (22) est disposé au centre du couvercle (10) du cylindre de fermeture et peut être obturé au moyen de la soupape de post-aspiration (23) en forme de soupape tronconique.

3. Dispositif selon les revendications 1 et 2, caractérisé en ce que les moyens de rappel du piston d'actionnement (17) se composent d'un ressort de compression.

4. Dispositif selon les revendications 1 et 2, caractérisé en ce que les moyens de rappel du piston d'actionnement (17) se composent d'une surface de piston qui est placée en regard de la surface (16) du piston d'actionnement et qui peut être sollicitée par du fluide sous pression.